# EUROPEAN PATENT APPLICATION

(11) **EP 4 395 055 A1**
(43) Date of publication of application: **03.07.2024**
(21) Application number: 22937714.8
(22) Date of filing: 18.04.2022
(51) Int. Cl.: H01M 50/583

(54) **ADAPTER ASSEMBLY, BATTERY CELL, BATTERY, AND ELECTRIC DEVICE**

(71) Applicant: Contemporary Amperex Technology Co., Limited, Ningde, Fujian 352100 (CN)
(72) Inventor: LI, Chuan, Ningde, Fujian 352100 (CN); GUO, Zhijun, Ningde, Fujian 352100 (CN); LEI, Yuyong, Ningde, Fujian 352100 (CN); SONG, Yingjun, Ningde, Fujian 352100 (CN)
(74) Representative: Holt, Lucy Rose
(86) International application number: PCT/CN2022/087445
(87) International publication number: WO 2023/201474

(57) **Abstract**

The present application relates to an adapter assembly, a battery cell, a battery, and an electric device. The adapter assembly comprises: a current collecting component provided with a terminal connecting portion, a fusing portion and a tab connecting portion, the fusing portion being connected between the terminal connecting portion and the tab connecting portion; and an insulating protection component arranged to wrap the fusing portion, the insulating protection component being used for keeping relative positions of the terminal connecting portion and the tab connecting portion fixed when the fusing portion is fused, wherein a first matching portion is formed on at least one surface of the fusing portion in the thickness direction, and at least part of one of the first matching portion and the insulating protection component is arranged in a protruding manner in the thickness direction and embedded into the other one of the first matching portion and the insulating protection component. According to the present application, the requirement of electric connection between an electrode assembly and an electrode terminal can be met for the battery cell, and the safety of the battery cell can be improved.

## Description

### TECHNICAL FIELD

This application relates to the technical field of batteries, and in particular, to an adapter assembly, a battery cell, a battery, and an electrical device.

### BACKGROUND

Batteries are widely used in electronic devices such as in a mobile phone, a notebook computer, an electric power cart, an electric vehicle, an electric airplane, an electric ship, an electric toy car, an electric toy ship, an electric toy airplane, and an electric tool.

In the development of battery technology, not only the battery performance needs to be improved, but also the safety of connection between an electrode assembly and an electrode terminal of each battery cell in a battery urgently needs to be ensured.

### SUMMARY

Some embodiments of this application provide an adapter assembly, a battery cell, a battery, and an electrical device. The adapter assembly can fulfill the requirement of electrical connection between the electrode assembly and an electrode terminal in the battery cell, and improve safety performance of the battery cell.

According to one aspect, an embodiment of this application discloses an adapter assembly, including: a current collecting component, including a terminal connecting portion, a fuse portion, and a tab connecting portion, where the fuse portion is connected between the terminal connecting portion and the tab connecting portion; and an insulation protection component, wrapping the fuse portion. The insulation protection component is configured to keep a fixed relative position between the terminal connecting portion and the tab connecting portion when the fuse portion is blown. A first mating portion is formed on at least one surface of the fuse portion in a thickness direction. At least a part of one of the first mating portion or the insulation protection component protrudes along the thickness direction and is embedded inside the other of the first mating portion or the insulation protection component.

In the technical solution of this embodiment of this application, the adapter assembly includes a current collecting component and an insulation protection component. The current collecting component includes a terminal connecting portion, a fuse portion, and a tab connecting portion. The terminal connecting portion may be configured to be connected to an electrode terminal. The tab connecting portion may be configured to be electrically connected to a tab. The fuse portion is connected between the terminal connecting portion and the tab connecting portion, and blows out when a current flowing through the current collecting component exceeds a preset threshold, thereby disconnecting the tab from the electrode terminal, and ensuring safety of the battery cell. In addition, the insulation protection component wraps the fuse portion. Therefore, when the fuse portion blows out, the relative position between the terminal connecting portion and the tab connecting portion can be kept fixed, so as to avoid safety hazards caused to the battery cell by reconnection between the terminal connecting portion and the tab connecting portion. In addition, a first mating portion is formed on at least one surface of the fuse portion in the thickness direction. At least a part of one of the first mating portion or the insulation protection component protrudes along the thickness direction and is embedded inside the other of the first mating portion or the insulation protection component, thereby improving the hermeticity of a junction face between the fuse portion and the insulation protection component, improving the sealing effect, and making the battery safer.

According to an embodiment of this application, the first mating portion is formed by removing a part of material of the fuse portion in the thickness direction.

With the first mating portion being formed by removing a part of material of the fuse portion in the thickness direction, the molding of the first mating portion is facilitated. Moreover, without increasing the flow area of the fuse portion, the above arrangement ensures that, when the current flowing through the current collecting component exceeds the preset threshold, the fuse portion blows out earlier than the terminal connecting portion and the tab connecting portion.

According to an embodiment of this application, the first mating portion includes a plurality of first embossments. Each of the first embossments is recessed toward an interior of the fuse portion from a surface of the fuse portion in the thickness direction. The insulation protection component is at least partially embedded in each first embossment.

By making the first mating portion include a plurality of first embossments, and causing at least a part of the insulation protection component to be embedded into each first embossment, this application ensures implementation of multi-point connection between the first mating portion and the insulation protection component, thereby improving the compactness of the junction face between the first mating portion and the insulation protection component, and in turn, improving the hermeticity of connection between the insulation protection component and the fuse portion.

According to an embodiment of this application, along the thickness direction, a depth of the first embossment is less than or equal to a thickness of the fuse portion.

By setting the depth of the first embossment to be less than or equal to the thickness of the fuse portion, that is, by enabling the first embossment to be in the form of a groove or through-hole, the structure is diversified and can be adjusted based on the required flow area and the required connection hermeticity level.

According to an embodiment of this application, along the thickness direction, the depth of the first embossment is less than the thickness of the fuse portion, and the first mating portion is formed on both surfaces of the fuse portion in the thickness direction.

By setting the depth of the first embossment to be less than the thickness of the fuse portion, the first mating portion is formed on both sides of the fuse portion in the thickness direction, thereby effectively improving the hermeticity of the junction face between the fuse portion and the insulation protection component on either side of the fuse portion in the thickness direction.

According to an embodiment of this application, along the thickness direction, the depth of the first embossment is less than one-half of the thickness of the fuse portion.

Through the above arrangement, when the first mating portion is formed on both sides of the fuse portion in the thickness direction, that is, when the two first mating portions are disposed opposite to each other in the thickness direction, the first embossment does not need to run through the fuse portion, thereby facilitating molding of the adapter assembly equipped with the first mating portion on both sides.

According to an embodiment of this application, along the thickness direction, an orthographic projection of the first embossment is circular, elliptical, or polygonal in shape.

By making the first embossment assume the above structural shape, the requirement on the connection between the fuse portion and the insulation protection component can be fulfilled, and the sealing effect for the contact face in between can be optimized.

According to an embodiment of this application, in the thickness direction, along a direction from the surface of the fuse portion to the interior of the fuse portion, an aperture of the first embossment decreases stepwise or gradually.

According to an embodiment of this application, the fuse portion includes a first connecting region, a second connecting region, and a transitional connecting region. The first connecting region is connected to the terminal connecting portion. The second connecting region is connected to the tab connecting portion. The transitional connecting region is connected between the first connecting region and the second connecting region. A distribution density of the first embossment in the transitional connecting region is less than a distribution density of the first embossment in the first connecting region and a distribution density of the first embossment in the second connecting region.

By making the distribution density of the first embossment in the transitional connecting region less than the distribution density of the first embossment in the first connecting region and in the second connecting region separately, this application can improve the hermeticity of the junction face between the insulation protection component and the fuse portion in the first connecting region and the second connecting region.

According to an embodiment of this application, in the thickness direction, a value of a depth of the first embossment, denoted as a, satisfies 0 mm < a ≤ 3 mm.

By setting the depth of the first embossment, denoted as a, to fall within the above value range, this application ensures high hermeticity of the junction face in contact with the insulation protection component, and facilitates processing of the first embossment.

According to an embodiment of this application, a recess recessed along the thickness direction is created on the terminal connecting portion. A second mating portion is formed on a bottom wall of the recess. The second mating portion includes a plurality of second embossments. Each of the second embossments is formed by recessing the bottom wall toward an interior of the bottom wall in the thickness direction.

In the adapter assembly provided in this embodiment of this application, a second mating portion is formed on the bottom wall of the recess. The second mating portion includes a plurality of second embossments, thereby increasing the roughness of the bottom wall of the recess. In this way, when the terminal connecting portion is welded to the electrode terminal by laser welding, the reflection of the laser beam is reduced, the utilization rate of laser energy is improved, and the welding requirement is fulfilled.

According to an embodiment of this application, the current collecting component assumes a plate-like structure as a whole. A notch running through the fuse portion along the thickness direction is created on the fuse portion. The notch is configured to reduce a flow area of at least a part of sections of the fuse portion. An orthogonal projection of the insulation protection component in the thickness direction covers the notch.

In the adapter assembly provided in this embodiment of this application, the current collecting component assumes a plate-like structure as a whole, thereby facilitating processing and molding, and fulfilling the requirements of connection to the electrode terminal and the tab. The notch is conducive to reducing the flow area of a region corresponding to the fuse portion, and improving the safety performance of the adapter assembly. The orthographic projection of the insulation protection component in the thickness direction covers the notch. In this way, when the fuse portion blows out at the notch, the insulation protection component can ensure the relative position between the remaining two sides of the fuse portion to keep unchanged, thereby meeting the requirement of keeping a fixed relative position between the terminal connecting portion and the tab connecting portion in the case of blowout of the fuse portion.

According to another aspect, an embodiment of this application provides a battery cell, including: a housing; an electrode assembly, disposed in the housing, where the electrode assembly includes a tab; and an end cap assembly, configured to seal an opening of the housing, where the end cap assembly includes an electrode terminal; and the adapter assembly disclosed above. The tab connecting portion is configured to be connected to the tab. The terminal connecting portion is configured to be connected to the electrode terminal.

According to still another aspect, an embodiment of this application provides a battery, including the battery cell disclosed above.

According to yet another aspect, an embodiment of this application provides an electrical device, including the battery disclosed above.

The foregoing description is merely an overview of the technical solutions of this application. Some specific embodiments of this application are described below illustratively to enable a clearer understanding of the technical solutions of this application, enable implementation of the technical solutions based on the subjectmatter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to some embodiments of this application;
FIG. 2 is an exploded view of a battery according to some embodiments of this application;
FIG. 3 is a schematic exploded view of a battery cell according to some embodiments of this application; and
FIG. 4 is an axonometric drawing of an adapter assembly according to some embodiments of this application;
FIG. 5 is a top view of an adapter assembly according to some embodiments of this application;
FIG. 6 is a cross-sectional view of FIG. 5 sectioned along an A-A direction;
FIG. 7 is a partial cross-sectional view of an adapter assembly according to some other embodiments of this application;
FIG. 8 is a partial cross-sectional view of an adapter assembly according to still some other embodiments of this application;
FIG. 9 is a partial cross-sectional view of a current collecting component of an adapter assembly according to still some other embodiments of this application;
FIG. 10 is a partial cross-sectional view of a current collecting component of an adapter assembly according to yet some other embodiments of this application;
FIG. 11 is a top view of an adapter assembly according to yet some other embodiments of this application;
FIG. 12 is an axonometric drawing of an adapter assembly according to yet some other embodiments of this application; and
FIG. 13 is a top view of an adapter assembly according to yet some other embodiments of this application.

### List of reference numerals:

1000-vehicle;
100-battery; 200-controller; 300-motor;
10-box; 11-first part; 12-second part; 13-accommodation space;
20-battery cell;
21-housing;
22-end cap assembly; 221-cap plate; 222-electrode terminal;
23-electrode assembly; 231-tab;
24-adapter assembly;
241-current collecting component;
2411-terminal connecting portion; 2411a-recess; 2411b-second mating portion; 2411c-second embossment;
2412-fuse portion; 2412a-first connecting region; 2412b-transitional connecting region; 2412c-second connecting region; 2412d-notch;
2413-tab connecting portion;
2414-first mating portion; 2414a-first embossment;
242-insulation protection component;
X-thickness direction

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

It is hereby noted that, unless otherwise specified, the technical terms or scientific terms used in embodiments of this application bear the meanings commonly understood by a person skilled in the technical field of embodiments of this application.

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In addition, the technical terms such as "first" and "second" are used merely for ease of description, but not to indicate or imply relative importance or implicitly specify the number of technical features mentioned. In the description of the embodiments of this application, unless otherwise expressly specified, "a plurality of" means two or more.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

In the description of embodiments of this application, unless otherwise expressly specified and defined, a first feature being "on" or "under" a second feature may mean that the first feature is in direct contact with the second feature, or the first feature is in indirect contact with the second feature through an intermediary. In addition, a first feature being "on", "above", or "over" a second feature may be that the first feature is exactly above or obliquely above the second feature, or simply that the first feature is at an altitude higher than the second feature. A first feature being "under", "below", or "beneath" a second feature may be that the first feature is exactly under or obliquely under the second feature, or simply that the first feature is at an altitude lower than the second feature.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

In this application, a battery cell may include a lithium-ion secondary battery cell, a lithium-ion primary battery cell, a lithium-sulfur battery cell, a sodiumlithium-ion battery cell, a sodium-ion battery cell, a magnesium-ion battery cell, or the like. The embodiments of this application do not limit the type of the battery cell. The battery cell may be in various shapes such as cylindrical, flat, cuboidal or other shapes. The embodiments of this application do not limit the shape of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly, an electrolyte solution, and end cap assembly, and an adapter assembly. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. The positive active material layer overlays a surface of the positive current collector. The positive current collector includes a positive current collecting portion and a positive tab connected to the positive current collecting portion. The positive current collecting portion is coated with a positive active material layer, and the positive tab is not coated with the positive active material layer. Using a lithium-ion battery as an example, the positive current collector may be made of aluminum. The positive active material layer includes a positive active material. The positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. The negative current collector includes a negative current collecting portion and a negative tab connected to the negative current collecting portion. The negative current collecting portion is coated with a negative active material layer, and the negative tab is not coated with the negative active material layer. The negative current collector may be made of copper. The negative active material layer includes a negative active material. The negative active material may be carbon, silicon, or the like. The separator may be made of a material such as PP (polypropylene, polypropylene) or PE (polyethylene, polyethylene).

The end cap assembly includes an electrode terminal. The adapter assembly is configured to be electrically connected to the tab of the electrode assembly to the electrode terminal. The applicant hereof has noticed that, in a case that, after the adapter assembly blows out when the current flowing through the adapter assembly exceeds a preset threshold, there is a problem of unreliable connection between the insulation protection component and the current collecting component, thereby bringing safety hazards to the battery cell.

To alleviate the problem of poor insulation after blowout of the adapter assembly, the applicant has conducted more in-depth research and found that, when a battery cell is being transported or stressed, the insulation protection component of the adapter assembly is prone to deformation. Consequently, a junction face between the insulation protection component and the current collecting component is prone to warp to create a gap, thereby impairing the reliability of the connection between the insulation protection component and the current collecting component, and impairing the tightness of wrapping the fuse portion by the insulation protection component. This deteriorates performance of connection and sealing between the insulation protection component of the adapter assembly and the current collecting component, gives rise to a relative displacement or even detachment between the insulation protection component and the fuse portion, or causes the electrolyte solution to enter the fuse portion after the adapter assembly blows out, thereby reconnecting the terminal connecting portion to the tab connecting portion electrically, and bringing safety hazards to the battery cell.

Based on the above considerations, in order solve the problems of poor connection and sealing of the adapter assembly, through in-depth research, the inventor has designed an adapter assembly. The adapter assembly includes a current collecting component and insulation protection component. The current collecting component includes a terminal connecting portion, a fuse portion, and a tab connecting portion. The fuse portion is connected between the terminal connecting portion and the tab connecting portion. The fuse portion is configured to blow out when the current flowing through the current collecting component exceeds a preset threshold. The insulation protection component wraps the fuse portion. The insulation protection component is configured to keep a fixed relative position between the terminal connecting portion and the tab connecting portion when the fuse portion is blown. A first mating portion is formed on at least one surface of the fuse portion in a thickness direction. At least a part of one of the first mating portion or the insulation protection component protrudes along the thickness direction and is embedded inside the other of the first mating portion or the insulation protection component.

In such an adapter assembly, the fuse portion is connected between the terminal connecting portion and the tab connecting portion, and blows out when the current flowing through the current collecting component exceeds the preset threshold, thereby disconnecting the tab from the electrode terminal, and ensuring safety of the battery cell. In addition, the insulation protection component wraps the fuse portion. Therefore, when the fuse portion blows out, the relative position between the terminal connecting portion and the tab connecting portion can be kept fixed, so as to avoid safety hazards caused to the battery cell by reconnection between the terminal connecting portion and the tab connecting portion. In addition, a first mating portion is formed on at least one surface of the fuse portion in the thickness direction. At least a part of one of the first mating portion or the insulation protection component protrudes along the thickness direction and is embedded inside the other of the first mating portion or the insulation protection component, thereby improving the connection tightness of the junction face between the fuse portion and the insulation protection component, and making the battery safer.

The adapter assembly described in this embodiment of this application is applicable to a battery cell, a battery, and an electrical device that uses the battery.

The electrical device may be a vehicle, a mobile phone, a portable device, a notebook computer, a ship, a spacecraft, an electric toy, an electric tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

Understandably, the technical solutions described in an embodiment of this application are not only applicable to the battery and electrical device described above, but also applicable to all batteries containing a box and all electrical devices powered by a battery. However, for brevity, the following embodiments are described by using an electric vehicle as an example.

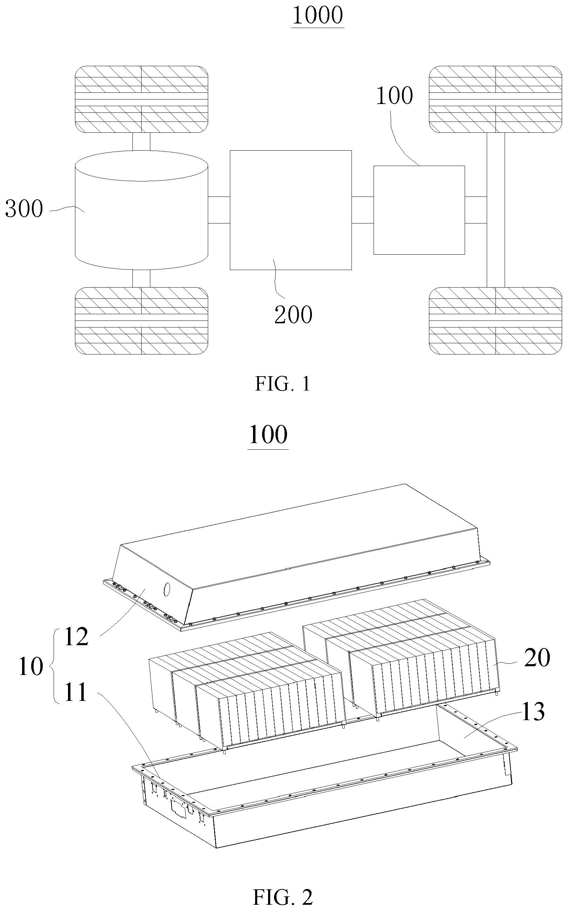

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit each other. The first part 11 and the second part 12 together define an accommodation space 13 configured to accommodate the battery cell 20. The second part 12 may be a hollow structure that is opened at one end. The first part 11 may be a plate-like structure. The first part 11 fits the opening of the second part 12 so that the first part 11 and the second part 12 together define the accommodation space 13. Alternatively, the first part 11 and the second part 12 each may be a hollow structure that is opened at one end. The opening of the first part 11 fits and covers the opening of the second part 12. Of course, the box 10 formed by the first part 11 and the second part 12 may be in various shapes, such as a cylinder or a cuboid.

The battery 100 may contain a plurality of battery cells. The plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box 10. Alternatively, the plurality of battery cells are connected in series, parallel, or series-and-parallel pattern to form a battery module first, and then a plurality of battery modules are connected in series, parallel, or series-and-parallel pattern to form an entire battery 100 for being accommodated in the box 10. The battery 100 may further include other structures. For example, the battery 100 may further include a busbar component. The busbar component is configured to implement electrical connection between the plurality of battery cells.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

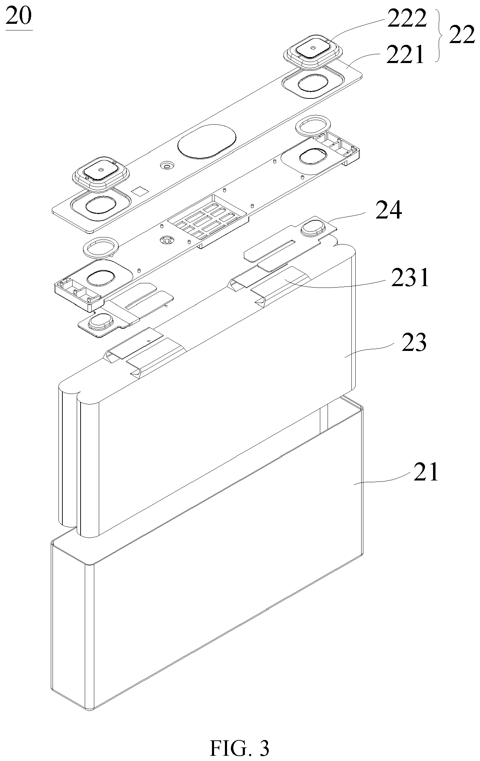

Referring to FIG. 3, FIG. 3 is a schematic structural exploded view of a battery cell 20 according to some embodiments of this application. The battery cell 20 is a minimum unit of a battery. The battery cell 20 includes a housing 21, an electrode assembly 23, an end cap assembly 22, and an adapter assembly 24.

The housing 21 is a component configured to fit the end cap assembly 22 to form an internal environment of the battery cell 20. The formed internal environment may be used to accommodate the electrode assembly 23, an electrolyte solution, and other components. The housing 21 and the end cap assembly 22 may be stand-alone components. An opening may be made on the housing 21. At the opening, the end cap assembly 22 fits and covers the opening to form the internal environment of the battery cell 20. Without limitation, the end cap assembly 22 and the housing 21 may be integrated instead. Specifically, the end cap assembly 22 and the housing 21 may form a common connection interface before other components are put into the housing. Subsequently, when the interior of the housing 21 needs to be sealed, the end cap assembly 22 is made to fit with the housing 21. The housing 21 may be in various shapes and sizes, such as a cuboid, cylinder, or hexagonal prism. Specifically, the shape of the housing 21 may depend on the specific shape and size of the electrode assembly 23. The housing 21 may be made of a variety of materials such as copper, iron, aluminum, stainless steel, aluminum alloy, or plastic, without being particularly limited herein.

The end cap assembly 22 is a component that fits and covers the opening of the housing 21 to isolate the internal environment of the battery cell 20 from the external environment. Without limitation, the shape of the end cap assembly 22 may be adapted to the shape of the housing 21 to fit the housing 21. Optionally, the end cap assembly 22 may be made of a material of appropriate hardness and strength (such as aluminum alloy), so that the end cap assembly 22 is not prone to deform when squeezed or impacted. In this way, the battery cell 20 achieves higher structural strength and higher safety performance. The end cap assembly 22 may include functional components such as an electrode terminal 222 and a cap plate 221. The electrode terminal 222 may be configured to be electrically connected to the electrode assembly 23 to output or input electrical energy of the battery cell 20. The end cap assembly 22 may also be made of a variety of materials such as copper, iron, aluminum, stainless steel, aluminum alloy, or plastic, and the materials are not particularly limited herein. In some embodiments, an insulator 26 may be further disposed on an inner side of the end cap assembly 22. The insulator 26 may be configured to isolate the electrode assembly 23 in the housing 21 from the end cap assembly 22 to reduce the short-circuit risk. For example, the insulator may be plastic, rubber, or the like.

The electrode assembly 23 is a component that reacts electrochemically in the battery cell 20. The housing 21 may contain one or more electrode assemblies 23. The electrode assembly 23 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion of the electrode assembly 23. The part, coated with no active material, of the positive electrode plate and the negative electrode plate separately, constitutes a tab 231. The positive tab and the negative tab may be located at one end of the body portion together or at two ends of the body portion respectively. In a charge-and-discharge process of the battery, the positive active material and the negative active material react with an electrolytic solution. The tabs 231 are connected to electrode terminals 222 to form a current circuit.

The adapter assembly 24 is configured to connect the tab 231 of the electrode assembly 23 to the electrode terminal 222 of the end cap assembly 22 to form a current loop, and be able to blow out when the current flowing through the electrode assembly 23 exceeds a preset threshold in a case of a short-circuit of the battery cell 20, thereby ensuring the safety of the battery.

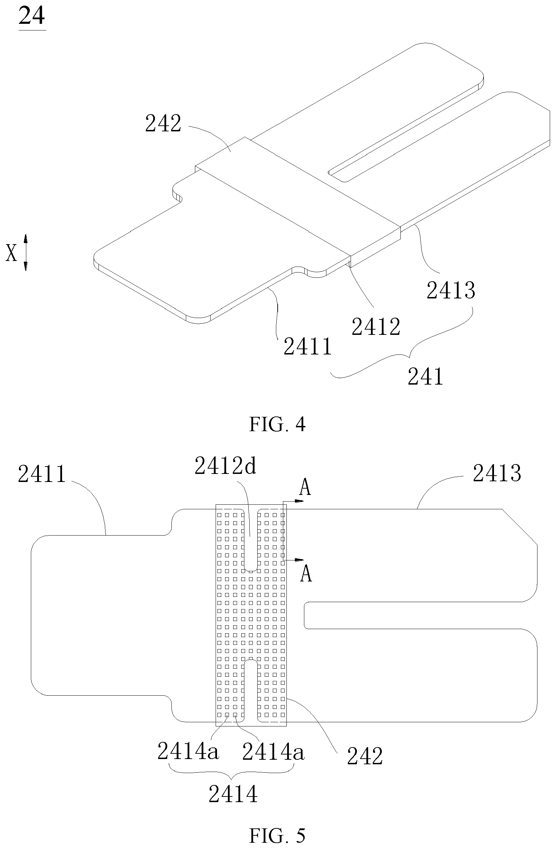

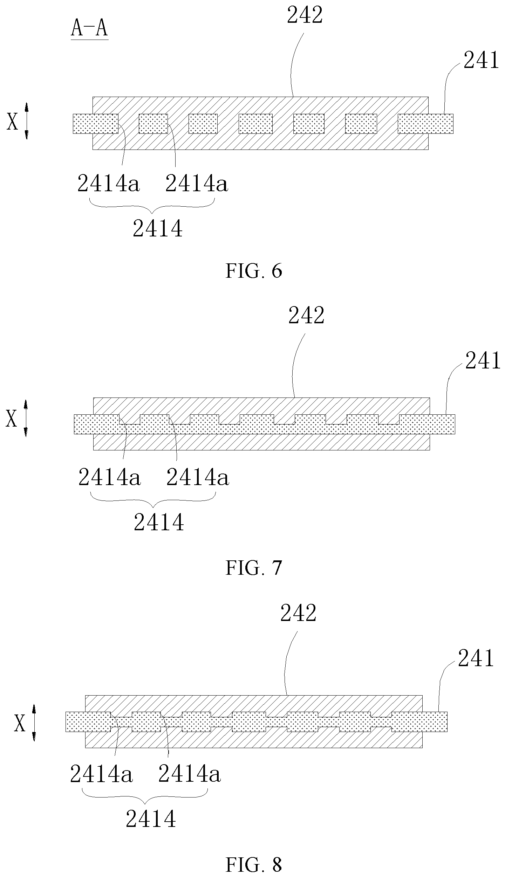

Referring to FIG. 4 and FIG. 6, FIG. 4 is an axonometric drawing of an adapter assembly 24 according to some embodiments of this application; FIG. 5 is a top view of an adapter assembly 24 according to some embodiments of this application; and FIG. 6 is a cross-sectional view of FIG. 5 sectioned along an A-A direction.

The adapter assembly 24 includes a current collecting component 241 and insulation protection component 242. The current collecting component 241 includes a terminal connecting portion 2411, a fuse portion 2412, and a tab connecting portion 2413. The fuse portion 2412 is connected between the terminal connecting portion 2411 and the tab connecting portion 2413. The fuse portion 2412 is configured to blow out when the current flowing through the current collecting component 241 exceeds a preset threshold. The insulation protection component 242 wraps the fuse portion 2412. The insulation protection component 242 is configured to keep a fixed relative position between the terminal connecting portion 2411 and the tab connecting portion 2413 when the fuse portion 2412 is blown. A first mating portion 2414 is formed on at least one surface of the fuse portion 2412 in a thickness direction X. At least a part of one of the first mating portion 2414 or the insulation protection component 242 protrudes along the thickness direction X and is embedded inside the other of the first mating portion or the insulation protection component.

Optionally, the terminal connecting portion 2411 may be configured to be connected to the electrode terminal 222 of the end cap assembly 22. The tab connecting portion 2413 may be configured to be connected to the tab 231 of the electrode assembly 23.

Optionally, the fuse portion 2412 is connected between the terminal connecting portion 2411 and the tab connecting portion 2413. The fuse portion 2412, the terminal connecting portion 2411, and the tab connecting portion 2413 may be a one-piece structure.

Optionally, the flow area of at least a part of the fuse portion 2412 may be less than the flow area of the terminal connecting portion 2411 and the flow area of the tab connecting portion 2413. In this way, the fuse portion 2412 is blown when the current flowing through the current collecting component 241 exceeds the preset threshold.

Optionally, a notch may be created on the fuse portion on one side in the width direction of the fuse portion, or on both sides in the width direction of the fuse portion; or, one, two or more through-holes may be created in a region between the two sides in the width direction, thereby causing the flow area of at least a part of the fuse portion to be less than the flow area of the terminal connecting portion 2411 and the flow area of the tab connecting portion 2413. Optionally, the width direction of the fuse portion is perpendicular to the thickness direction X.

Optionally, the value of the preset threshold is not particularly limited, and may be set based on the safety level of the battery cell 20 in which the adapter assembly 24 is applied.

Optionally, that the insulation protection component 242 wraps the fuse portion 2412 may be understood as: the fuse portion 2412 is surrounded by the insulation protection component 242, and the fuse portion 2412 may be located inside the insulation protection component 242.

Optionally, that the insulation protection component 242 is configured to keep a fixed relative position between the terminal connecting portion 2411 and the tab connecting portion 2413 when the fuse portion 2412 is blown may be understood as: when the current flowing through the current collecting component 241 exceeds the preset threshold, the fuse portion 2412 is blown and divided into two separate parts. One part is connected to the terminal connecting portion 2411, and the other part is connected to the tab connecting portion 2413. Because the two parts formed by the blowout of the fuse portion 2412 are located in the insulation protection component 242, even if the fuse portion 2412 blows out, the positions of the two separate parts inside the insulation protection component 242 remain unchanged, thereby keeping the relative position between the terminal connecting portion 2411 and the tab connecting portion 2413 unchanged.

Optionally, the first mating portion 2414 formed on at least one surface of the fuse portion 2412 in the thickness direction X may be a bulge or a recess. At least a part of one of the first mating portion 2414 or the insulation protection component 242 protrudes along the thickness direction X and is embedded inside the other of the first mating portion or the insulation protection component. Resultingly, the first mating portion 2414 at least partially protrudes along the thickness direction X and is embedded inside the insulation protection component 242; or, the insulation protection component 242 at least partially protrudes along the thickness direction X and is embedded inside the first mating portion 2414.

In the adapter assembly 24 provided in this embodiment of this application, the terminal connecting portion 2411 may be configured to be connected to an electrode terminal 222. The tab connecting portion 2413 may be configured to be electrically connected to a tab 231. The fuse portion 2412 is connected between the terminal connecting portion 2411 and the tab connecting portion 2413, and blows out when the current flowing through the current collecting component 241 exceeds the preset threshold, thereby disconnecting the tab 231 from the electrode terminal 222, and ensuring safety of the battery cell 20. In addition, the insulation protection component 242 wraps the fuse portion 2412. Therefore, when the fuse portion 2412 blows out, the relative position between the terminal connecting portion 2411 and the tab connecting portion 2413 can be kept fixed, so as to avoid safety hazards caused to the battery cell 20 by reconnection between the terminal connecting portion and the tab connecting portion. In addition, a first mating portion 2414 is formed on at least one surface of the fuse portion 2412 in the thickness direction X. At least a part of one of the first mating portion 2414 or the insulation protection component 242 protrudes along the thickness direction X and is embedded inside the other of the first mating portion or the insulation protection component, thereby improving the hermeticity of the junction face between the fuse portion 2412 and the insulation protection component 242 when the battery cell 20 containing the adapter assembly 24 is being stressed or transported. In this way, even if the fuse portion 2412 blows out, high hermeticity is ensured between the fuse portion and the insulation protection component 242, and foreign substances are prevented from entering and causing reconnection of the remaining parts of the blown fuse portion 2412.

Moreover, at least a part of one of the first mating portion 2414 or the insulation protection component 242 protrudes along the thickness direction X and is embedded inside the other of the first mating portion or the insulation protection component. This mating relationship ensures sufficient strength of connection between each of the two blowout-induced parts of the fuse portion 2412 and the insulation protection component 242, and avoids a change of the relative position between the fuse portion and the insulation protection component 242, thereby effectively avoiding reconnection of the remaining parts of the blown fuse portion 2412, and improving safety of the battery cell 20.

Referring to FIG. 4 to FIG. 6, in some optional embodiments, the first mating portion 2414 is formed by removing a part of material of the fuse portion 2412 in the thickness direction X.

The forming by removing a part of material may be understood as: forming the first mating portion 2414 by removing a part of material from the fuse portion 2412 through a stamping or milling process or another process on a side of the fuse portion 2412 along the thickness direction X.

The first mating portion 2414 may be in the shape of a groove that is smaller than the fuse portion 2412 in thickness, or may be in the shape of a hole that is equal to the fuse portion 2412 in thickness.

In the adapter assembly 24 provided in this embodiment of this application, the first mating portion 2414 is formed by removing a part of material of the fuse portion 2412 in the thickness direction X, thereby facilitating the molding of the first mating portion 2414. Moreover, without increasing the flow area of the fuse portion 2412, the above arrangement ensures that, when the current flowing through the current collecting component 241 exceeds the preset threshold, the fuse portion 2412 blows out earlier than the terminal connecting portion 2411 and the tab connecting portion 2413.

In some optional embodiments, in the adapter assembly 24 provided in this embodiment of this application, the first mating portion 2414 includes a plurality of first embossments 2414a. Each of the first embossments 2414a is recessed toward an interior of the fuse portion 2412 from a surface of the fuse portion 2412 in the thickness direction X. The insulation protection component 242 is at least partially embedded in each first embossment 2414a.

The number of the first embossments 2414a may be set based on the dimensional specifications of the fuse portion 2412. The first embossments 2414a may be grooves extending along the thickness direction X, or may be holes extending along the thickness direction X.

The insulation protection component 242 includes bulges that match the first embossments 2414a respectively in shape. The bulges of the insulation protection component 242 extend into the first embossments 2414a, and are embedded in the first embossments 2414a, respectively.

In the adapter assembly 24 provided in this embodiment of this application, by making the first mating portion 2414 include a plurality of first embossments 2414a, and causing at least a part of the insulation protection component 242 to be embedded into each first embossment 2414a, this application ensures implementation of multi-point connection between the first mating portion 2414 and the insulation protection component 242, thereby improving the compactness of the junction face between the first mating portion and the insulation protection component, and in turn, improving the hermeticity of connection between the insulation protection component 242 and the fuse portion 2412.

In some optional embodiments, along the thickness direction X, a depth of the first embossment 2414a is less than or equal to a thickness of the fuse portion 2412.

Optionally, along the thickness direction X, the depth of the first embossment 2414a may be equal to the thickness of the fuse portion 2412. In other words, the first embossment 2414a may run through the fuse portion 2412 in the thickness direction X, and the first embossment 2414a may be in the form of a through-hole as a whole.

Referring to FIG. 7, FIG. 7 is a partial cross-sectional view of an adapter assembly 24 according to some other embodiments of this application.

In some embodiments, in the thickness direction X, the depth of the first embossment 2414a may be less than the thickness of the fuse portion 2412. In other words, the first embossment 2414a does not run through the fuse portion 2412 in the thickness direction X, but includes a bottom wall in the thickness direction X. The first embossment 2414a may be in the form of a groove as a whole.

In the adapter assembly 24 provided in this embodiment of this application, by setting the depth of the first embossment 2414a to be less than or equal to the thickness of the fuse portion 2412, that is, by enabling the first embossment 2414a to be in the form of a groove or through-hole, the structure is diversified and can be selected based on the required flow area and the required connection hermeticity level.

Referring to FIG. 8, FIG. 8 is a partial cross-sectional view of an adapter assembly 24 according to still some other embodiments of this application.

In some optional embodiments, along the thickness direction X, the depth of the first embossment 2414a is less than the thickness of the fuse portion 2412, and the first mating portion 2414 is formed on both surfaces of the fuse portion 2412 in the thickness direction X.

Optionally, along the thickness direction X, the depth of the first embossment 2414a is less than the thickness of the fuse portion 2412, thereby causing the first mating portion 2414 to be formed on both surfaces of the fuse portion 2412 in the thickness direction X. The two first mating portions 2414 of the fuse portion 2412 in the thickness direction X may be disposed opposite to each other or staggered apart.

Optionally, among the first mating portions 2414 formed on the two sides of the fuse portion 2412 in the thickness direction X, the depth of the first embossment 2414a of one first mating portion may be the same as or different from the depth of the first embossment of the other first mating portion.

In the adapter assembly 24 provided in this embodiment of this application, by setting the depth of the first embossment 2414a to be less than the thickness of the fuse portion 2412, the first mating portion 2414 is formed on both sides of the fuse portion 2412 in the thickness direction X, thereby effectively improving the hermeticity of the junction face between the fuse portion 2412 and the insulation protection component 242 on either side of the fuse portion in the thickness direction X.

In some optional embodiments, along the thickness direction X, the depth of the first embossment 2414a is less than one-half of the thickness of the fuse portion 2412. In other words, the depth of the first embossment 2414a is less than a half of the thickness of the fuse portion 2412.

Through the above arrangement, when the first mating portion 2414 is formed on both sides of the fuse portion 2412 in the thickness direction X, that is, when the two first mating portions 2414 are disposed opposite to each other in the thickness direction X, the first embossment does not need to run through the fuse portion 2412, thereby facilitating molding of the adapter assembly 24 equipped with the first mating portion 2414 on both sides.

In some optional embodiments, in the adapter assembly 24 provided in this embodiment of this application, along the thickness direction X, an orthographic projection of the first embossment 2414a is circular, elliptical, or polygonal in shape.

Optionally, along the thickness direction X, the orthographic projection of the first embossment 2414a may be circular in shape.

Optionally, along the thickness direction X, the orthographic projection of the first embossment 2414a may be elliptical in shape.

Optionally, along the thickness direction X, the orthographic projection of the first embossment 2414a may be rectangular, pentagonal, hexagonal or the like in shape.

Optionally, along the thickness direction X, when the orthographic projection of the first embossment 2414a is polygonal in shape, the orthographic projection may be a regular polygon such as a square, a regular pentagon, or a regular hexagon.

By making the first embossment 2414a assume the above structural shape, the requirement on the connection between the fuse portion and the insulation protection component 242 can be fulfilled, and the sealing effect for the contact face in between can be optimized.

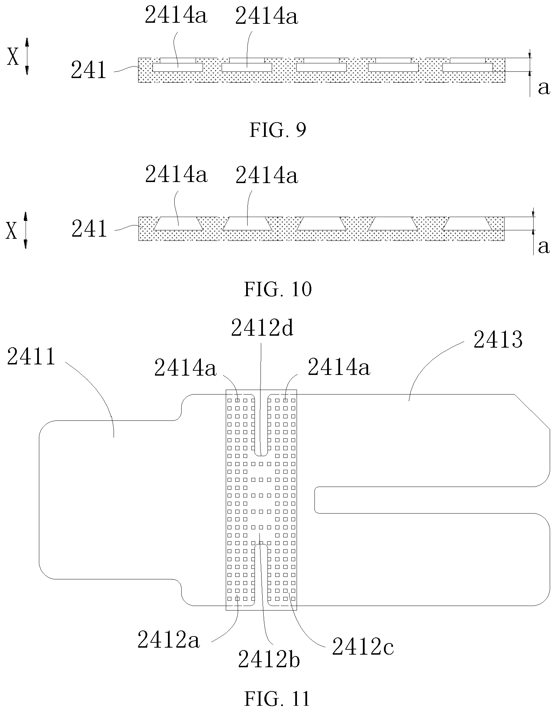

Referring to FIG. 9 and FIG. 10, FIG. 9 is a partial cross-sectional view of a current collecting component 241 of an adapter assembly 24 according to still some other embodiments of this application; and FIG. 10 is a partial cross-sectional view of a current collecting component 241 of an adapter assembly 24 according to yet some other embodiments of this application.

In some optional embodiments, in the adapter assembly 24 provided in this embodiment of this application, along the thickness direction X, an aperture of the first embossment 2414a decreases stepwise or gradually.

Optionally, along the thickness direction X, the first embossment 2414a is a variable cross-section structure.

As shown in FIG. 9, optionally, the aperture of the first embossment 2414a may be decrease stepwise, which means that, the first embossment 2414a may be in a stepped shape. A stepped face may be formed between adjacent sections of the first embossment, so as to restrict a part of the insulation protection component 242 from being detached from the first embossment 2414a, where the part extends into the first embossment 2414a.

As shown in FIG. 10, optionally, the aperture of the first embossment 2414a may decrease gradually. Through the above arrangement, the first embossment 2414a may be in a tapered shape. A narrow opening end of the first embossment may be oriented toward a part of the insulation protection component 242, the part extending into the first embossment 2414a, thereby also restricting the part of the insulation protection component 242 from being detached from the first embossment 2414a, where the part extends into the first embossment 2414a.

The above arrangement increases the connection strength between the first embossment 2414a and the insulation protection component 242, thereby ensuring high hermeticity of the junction face in between.

Referring to FIG. 11, FIG. 11 is a top view of an adapter assembly 24 according to yet some other embodiments of this application.

In some optional embodiments, the fuse portion 2412 includes a first connecting region 2412a, a second connecting region 2412c, and a transitional connecting region 2412b. The first connecting region 2412a is connected to the terminal connecting portion 2411. The second connecting region 2412c is connected to the tab connecting portion 2413. The transitional connecting region 2412b is connected between the first connecting region 2412a and the second connecting region 2412c. A distribution density of the first embossment 2414a in the transitional connecting region 2412b is less than a distribution density of the first embossment 2414a in the first connecting region 2412a and a distribution density of the first embossment in the second connecting region 2412c.

Optionally, the first connecting region 2412a, the transitional connecting region, and the second connecting region 2412c may be disposed successively. Optionally, the flow area of the transitional connecting region is less than the flow area of the first connecting region 2412a and the flow area of the second connecting region 2412c.

Optionally, the distribution density of the first embossment 2414a in the transitional connecting region 2412b is less than the distribution density of the first embossment 2414a in the first connecting region 2412a and in the second connecting region 2412c. In other words, the number of the first embossments 2414a per unit area in the transitional connecting region 2412b is less than the number of the first embossments 2414a per unit area in the first connecting region 2412a and the number in the second connecting region 2412c.

For example, if the number of the first embossments 2414a per unit area in the transitional connecting region 2412b is 5, then the number of the first embossments 2414a per unit area in the first connecting region 2412a, and the number in the second connecting region 2412c, may be set to be 10. However, such numbers are merely examples recited for ease of understanding this application. The actual distribution density is not limited to the examples given above, and may be specifically set based on the dimensions of the adapter assembly 24, the required strength of connection between the current collecting component 241 and the insulation protection component 242, and the like.

In the adapter assembly 24 provided in this embodiment of this application, the distribution density of the first embossment 2414a in the transitional connecting region 2412b is set to be less than the distribution density of the first embossment 2414a in the first connecting region 2412a and in the second connecting region 2412c, thereby improving the hermeticity of the junction face between the insulation protection component 242 and the fuse portion 2412 in the first connecting region 2412a and the second connecting region 2412c.

Referring to FIG. 9 to FIG. 11, in some optional embodiments, in the thickness direction X, the value of the depth of the first embossment 2414a, denoted as a, satisfies 0 mm < a ≤ 3 mm.

Optionally, the depth of the first embossment 2414a, denoted as a, may be any value between 0 mm and 3 mm, inclusive of 3 mm.

Optionally, the depth of the first embossment 2414a may be any one of 0.5 mm, 1 mm, 1.5 mm, 2 mm, 2.5 mm, or 3 mm.

In the adapter assembly 24 provided in this embodiment of this application, by setting the depth of the first embossment 2414a, denoted as a, to fall within the above value range, this application ensures high hermeticity of the junction face in contact with the insulation protection component 242, and facilitates processing of the first embossment 2414a.

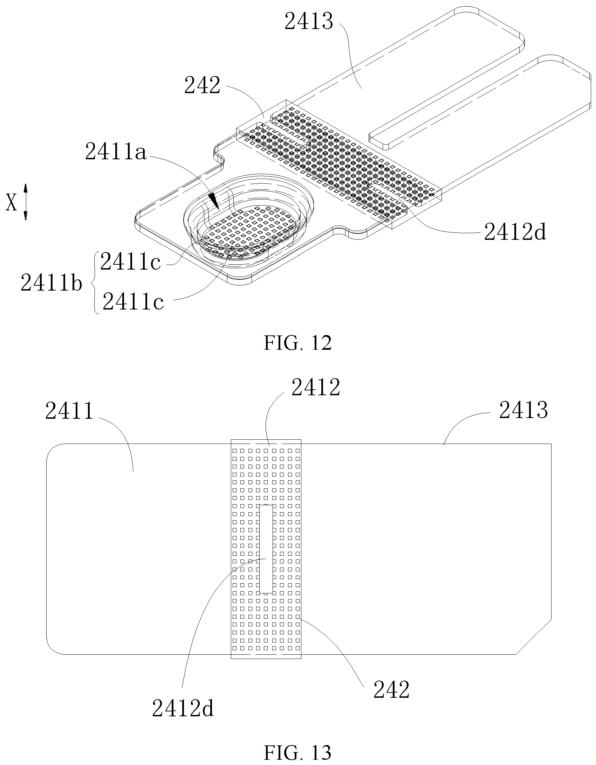

Referring to FIG. 12, FIG. 12 is an axonometric drawing of an adapter assembly 24 according to yet some other embodiments of this application.

In some optional embodiments, a recess 2411a recessed along the thickness direction X is created on the terminal connecting portion 2411. A second mating portion 2411b is formed on a bottom wall of the recess 2411a. The second mating portion 2411b includes a plurality of second embossments 2411c. Each of the second embossments 2411c is formed by recessing the bottom wall toward the interior of the bottom wall in the thickness direction X.

The recess 2411a is configured to fit the electrode terminal 222. The shape of the recess 2411a may match the shape of the electrode terminal 222, so as to fulfill the requirement of electrical connection to the electrode terminal 222.

The orthographic projection of each second embossment 2411c in the thickness direction X may be circular, elliptical, or polygonal in shape.

Optionally, along the thickness direction X, the thickness of the second embossment 2411c may be less than the thickness of the bottom wall of the recess 2411a.

In the adapter assembly 24 provided in this embodiment of this application, a second mating portion 2411b is formed on the bottom wall of the recess 2411a. The second mating portion 2411b includes a plurality of second embossments 2411c, thereby increasing the roughness of the bottom wall of the recess 2411a. In this way, when the terminal connecting portion 2411 is welded to the electrode terminal 222 by laser welding, the reflection of the laser beam is prevented, the utilization rate of laser energy is improved, and the welding requirement is fulfilled.

As shown in FIG. 12, as an optional embodiment, the current collecting component 241 assumes a plate-like structure as a whole. A notch 2412d running through the fuse portion along the thickness direction X is created on the fuse portion 2412. The notch 2412d is configured to cause the flow area of the fuse portion 2412 to be less than the flow area of the terminal connecting portion 2411 and the flow area of the tab connecting portion 2413. An orthogonal projection of the insulation protection component 242 in the thickness direction X covers the notch 2412d.

Optionally, the fact that the current collecting component 241 assumes a plate-like structure as a whole may be understood to mean that a majority of regions on the current collecting component 241 are plate-like. In other words, the current collecting component 241 substantially assumes a plate-like structure, on which bulges or recesses may exist.

Optionally, the notch 2412d may a U-shaped groove with an opening.

Optionally, a notch 2412d may be created on the fuse portion 2412 on one side in the width direction of the fuse portion, or notches 2412d may be created on both sides of the fuse portion in the width direction of the fuse portion.

Optionally, the flow area of the fuse portion 2412, the flow area of the terminal connecting portion 2411, and the flow area of the tab connecting portion 2413 may be understood as the cross-sectional area of a cross-section of the fuse portion 2412, the cross-sectional area of a cross-section of the terminal connecting portion 2411, and the cross-sectional area of a cross-section of the tab connecting portion 2413, respectively, sectioned in the arrangement direction of the fuse portion 2412, the terminal connecting portion 2411, and the tab connecting portion 2413.

Optionally, the arrangement direction of the fuse portion 2412, the terminal connecting portion 2411, and the tab connecting portion 2413 is perpendicular to the thickness direction X.

Optionally, when the fuse portion 2412 includes the first connecting region 2412a, the transitional connecting region 2412b, and the second connecting region 2412c, the notch 2412d may be specifically located in the transitional connecting region 2412b, so that the flow area of at least a part, located in the transitional connecting region 2412b, of the fuse portion 2412 is less than the flow area of the terminal connecting portion 2411 and the flow area of the tab connecting portion 2413.

Optionally, the notch 2412d on the fuse portion 2412 is located inside the insulation protection component 242. The insulation protection component 242 is disposed around the fuse portion 2412.

Referring to FIG. 13, FIG. 13 is a top view of an adapter assembly 24 according to yet some other embodiments of this application. Understandably, the shape of the notch 2412d is not limited to a U-shaped groove. As shown in FIG. 13, in some embodiments, the shape may be a closed hole instead.

In the adapter assembly 24 provided in this embodiment of this application, the current collecting component 241 assumes a plate-like structure as a whole, thereby facilitating processing and molding, and fulfilling the requirements of connection to the electrode terminal 222 and the tab 231. The notch 2412d is conducive to reducing the flow area of a region corresponding to the fuse portion 2412, and improving the safety performance of the adapter assembly 24. The orthographic projection of the insulation protection component 242 in the thickness direction X covers the notch 2412d. In this way, when the fuse portion 2412 blows out at the notch 2412d, the insulation protection component 242 can ensure the relative position between the remaining two sides of the fuse portion 2412 to keep unchanged, thereby meeting the requirement of keeping a fixed relative position between the terminal connecting portion 2411 and the tab connecting portion 2413 in the case of blowout of the fuse portion 2412.

In some optional embodiments, the terminal connecting portion 2411, the fuse portion 2412, and the tab connecting portion 2413 may be a one-piece structure, so as to ensure sufficient connection strength in between.

Optionally, the tab connecting portion 2413 may be two sheet-shaped units spaced apart and arranged in parallel. The two sheet-shaped units are spaced out and connected to the fuse portion 2412 separately. The tab connecting portion may be an integral sheet structure, as long as the structure can meet the requirement of connection to the tab 231.

According to some embodiments of this application, this application further provides a battery cell 20. The battery cell 20 includes a housing 21, an electrode assembly 23, an end cap assembly 22, and the adapter assembly 24 disclosed in any one of the above technical solutions. The electrode assembly 23 is disposed in the housing 21. The electrode assembly 23 includes a tab 231. The end cap assembly 22 is configured to seal an opening of the housing 21. The end cap assembly 22 includes an electrode terminal 222. The tab connecting portion 2413 is configured to be connected to the tab 231. The terminal connecting portion 2411 is configured to be connected to the electrode terminal 222.

In the battery cell 20 provided in this embodiment of this application, because the battery cell includes the adapter assembly 24 provided in any one of the above embodiments, the hermeticity between the current collecting component 241 and the insulation protection component 242 is high, and the overall safety of the battery cell 20 is high.

According to some embodiments of this application, this application further provides a battery. The battery includes the battery cell 20 disclosed in any one of the above technical solutions.

According to some embodiments of this application, this application further provides an electrical device. The electrical device includes the battery disclosed in any one of the above technical solutions, and the battery is configured to provide electrical energy for the electrical device.

The electrical device may be any device or system described above in which the battery is applied.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An adapter assembly, comprising:
a current collecting component, comprising a terminal connecting portion, a fuse portion, and a tab connecting portion, wherein the fuse portion is connected between the terminal connecting portion and the tab connecting portion; and
an insulation protection component, wrapping the fuse portion, wherein the insulation protection component is configured to keep a fixed relative position between the terminal connecting portion and the tab connecting portion when the fuse portion is blown, wherein
a first mating portion is formed on at least one surface of the fuse portion in a thickness direction, and at least a part of one of the first mating portion or the insulation protection component protrudes along the thickness direction and is embedded inside the other of the first mating portion or the insulation protection component.

2. The adapter assembly according to claim 1, wherein the first mating portion is formed by removing a part of material of the fuse portion in the thickness direction.

3. The adapter assembly according to claim 1 or 2, wherein the first mating portion comprises a plurality of first embossments, each of the first embossments is recessed toward an interior of the fuse portion from a surface of the fuse portion in the thickness direction, and the insulation protection component is at least partially embedded in each first embossment.

4. The adapter assembly according to claim 3, wherein, along the thickness direction, a depth of the first embossment is less than or equal to a thickness of the fuse portion.

5. The adapter assembly according to claim 4, wherein, along the thickness direction, the depth of the first embossment is less than the thickness of the fuse portion, and the first mating portion is formed on both surfaces of the fuse portion in the thickness direction.

6. The adapter assembly according to claim 5, wherein the depth of the first embossment is less than one-half of the thickness of the fuse portion.

7. The adapter assembly according to any one of claims 3 to 6, wherein, along the thickness direction, an orthographic projection of the first embossment is circular, elliptical, or polygonal in shape.

8. The adapter assembly according to any one of claims 3 to 7, wherein, in the thickness direction, along a direction from the surface of the fuse portion to the interior of the fuse portion, an aperture of the first embossment decreases stepwise or gradually.

9. The adapter assembly according to any one of claims 3 to 8, wherein the fuse portion comprises a first connecting region, a second connecting region, and a transitional connecting region; the first connecting region is connected to the terminal connecting portion; the second connecting region is connected to the tab connecting portion; the transitional connecting region is connected between the first connecting region and the second connecting region; and a distribution density of the first embossment in the transitional connecting region is less than a distribution density of the first embossment in the first connecting region and a distribution density of the first embossment in the second connecting region.

10. The adapter assembly according to any one of claims 3 to 9, wherein, in the thickness direction, a value of a depth of the first embossment, denoted as a, satisfies 0 mm < a ≤ 3 mm.

11. The adapter assembly according to any one of claims 1 to 10, wherein, a recess recessed along the thickness direction is created on the terminal connecting portion, a second mating portion is formed on a bottom wall of the recess, the second mating portion comprises a plurality of second embossments, and each of the second embossments is formed by recessing the bottom wall toward an interior of the bottom wall in the thickness direction.

12. The adapter assembly according to any one of claims 1 to 11, wherein the current collecting component assumes a plate-like structure as a whole, a notch running through the fuse portion along the thickness direction is created on the fuse portion, the notch is configured to reduce a flow area of at least a part of sections of the fuse portion, and an orthogonal projection of the insulation protection component in the thickness direction covers the notch.

13. A battery cell, comprising:
a housing;
an electrode assembly, disposed in the housing, wherein the electrode assembly comprises a tab;
an end cap assembly, configured to seal an opening of the housing, wherein the end cap assembly comprises an electrode terminal; and
the adapter assembly according to any one of claims 1 to 12, wherein the tab connecting portion is configured to be connected to the tab, and the terminal connecting portion is configured to be connected to the electrode terminal.

14. A battery, comprising the battery cell according to claim 13.

15. An electrical device, comprising the battery according to claim 14.
